# EUROPÄISCHE PATENTANMELDUNG

(11) **EP 0 947 898 A2**
(43) Veröffentlichungstag der Anmeldung: **06.10.1999**
(21) Anmeldenummer: 99103831.6
(22) Anmeldetag: 27.02.1999
(51) Int. Cl.: G05B 19/401, B25J 9/16, G05B 19/425

(54) **Verfahren und Vorrichtung zum Steuern eines beweglichen Gegenstandes**

(30) Priorität: 02.04.1998 DE 19814779
(71) Anmelder: VITRONIC Dr.-Ing. Stein Bildverarbeitungssysteme GmbH, 65189 Wiesbaden (DE)
(72) Erfinder: Dr. Frohn, Heiko, 65817 Eppstein/Ts. (DE); Lehn, Norbert, 65232 Taunusstein (DE)
(74) Vertreter: Weber, Dieter, Dr.

(57) **Zusammenfassung**

Die vorliegende Erfindung betrifft ein Verfahren zum Steuern der Bewegung eines beweglichen ersten Gegenstandes (1) relativ zu einem zweiten Gegenstand (2, 2'), mit Hilfe einer optischen Erfassung des zweiten Gegenstandes (2, 2') oder eines Teiles desselben durch ein optisches Erfassungssystem (4, 5), und zwar unter Erkennung eines am zweiten Gegenstand (2, 2') vorgegebenen Musters (3, 3') bzw. einer daran vorhandenen Struktur, wobei Vergleichsstrukturen bzw. -muster in einer Speichereinrichtung gespeichert sind, wobei der erste (1) und der zweite Gegenstand (2, 2') aus einer voneinander entfernten Position einander angenähert und miteinander in Eingriff gebracht werden. Ebenso betrifft dei vorliegende Erfindung eine entsprechende Vorrichtung. Um ein Verfahren und eine Vorrichtung mit den eingangs genannten Merkmalen zu schaffen, welche einen sicheren Eingriff der miteinander in Eingriff zu bringenden Teile des ersten und zweiten Gegenstandes auch dann ermöglichen, wenn der zweite Gegenstand während der Annäherungsbewegung gegenüber dem ersten Gegenstand mehr oder weniger unkontrollierbare Bewegungen vollführen kann und/oder wenn die Position, die der zweite Gegenstand einnehmen kann, nur sehr grob festgelegt werden kann. Es versteht sich, daß dabei die Teile des zweiten Gegenstandes, die mit den Teilen des ersten Gegenstandes in Eingriff zu bringen sind, dennoch immer im Bewegungsbereich bzw. innerhalb der Reichweite der letzteren liegen müssen, wird erfindungsgemäß vorgeschlagen, daß die Annäherung des ersten an den zweiten Gegenstand unter kontinuierlicher Erfassung der Strukturen (3, 3') des zweiten Gegenstandes (2, 2') durch die Erfassungseinrichtung (4, 5) des ersten Gegenstandes (1) erfolgt, wobei der Abstand zwischen den miteinander in Eingriff tretenden Teilen des ersten und zweiten Gegenstandes (1, 2, 2') kontinuierlich direkt oder indirekt ermittelt wird, wobei die Bewegungssteuerung in Abhängigkeit von dem jeweils erreichten Abstand und in Abhängigkeit von der jeweiligen festgestellten Abweichung von der gewünschten Annäherungsbahn erfolgt.

## Beschreibung

Die vorliegende Erfindung betrifft ein Verfahren zum Steuern der Bewegung eines beweglichen ersten Gegenstandes relativ zu einem zweiten Gegenstand, und zwar mit Hilfe einer optischen Erfassung des zweiten Gegenstandes oder eines Teiles desselben durch ein optisches Erfassungssystem, unter Erkennung eines am zweiten Gegenstand vorgegebenen Musters bzw. einer daran vorhandenen Struktur, wobei entsprechende Strukturen in einer Speichereinrichtung gespeichert sind und wobei der erste und der zweite Gegenstand aus einer voneinander entfernten Position einander angenähert und miteinander in Eingriff gebracht werden.

Ebenso betrifft die vorliegende Erfindung auch eine Vorrichtung zum Steuern der Bewegung eines beweglichen ersten Gegenstandes relativ zu einem zweiten Gegenstand, mit Antriebs- und Steuereinrichtungen für mindestens einen der Gegenstände, einer Musterspeicher- und einer Mustererkennungseinrichtung sowie einer optischen Erfassungseinrichtung für am zweiten Gegenstand vorgegebene oder angebrachte Muster bzw. Strukturen.

Entsprechende Verfahren und Vorrichtungen sind aus der sogenannten Robotik bzw. Robotertechnik bekannt. Bei dem Verfahren und der Vorrichtung, von welchen die vorliegende Erfindung ausgeht, muß zum Beispiel ein am Ende eines Roboterarmes angebrachtes Werkzeug mit einem Gegenstand in Eingriff treten, der seinerseits beweglich sein kann, so daß seine Position nicht von vornherein exakt definiert ist, sondern zunächst von einer optischen Erfassungseinrichtung erfaßt werden muß, um den Roboterarm bzw. das an diesem angebrachte Werkzeug gezielt mit dem betreffenden zweiten Gegenstand in Eingriff zu bringen. Die Tatsache, daß die Position des zweiten Gegenstandes, mit welchem der erste Gegenstand oder Teile des ersten Gegenstandes in Eingriff gebracht werden soll, nicht von vornherein eindeutig festliegt, unterscheidet derartige Verfahren und Vorrichtungen zum Beispiel von anderen automatischen Maschinen, wie zum Beispiel Werkzeugmaschinen mit Werkzeugwechselvorrichtungen, bei welchen verschiedene Werkzeuge in einem Werkzeugmagazin an exakt definierten Positionen angeordnet sind, so daß ein automatischer Werkzeugwechsel stattfinden kann, ohne daß die jeweiligen Werkzeuge hierfür optisch erfaßt werden müssen.

Bei anderen Verfahren und Vorrichtungen wird zum Beispiel ein Werkzeug, ein Lesekopf oder eine sonstige Vorrichtung kontinuierlich in einem im wesentlichen festen Abstand über die Oberfläche oder Teile der Oberfläche eines zweiten Gegenstandes hinwegbewegt. Auch dabei können Teile des ersten Gegenstandes mit Teilen des zweiten Gegenstandes in Eingriff stehen, jedoch wird dabei nicht der Annäherungsvorgang des ersten Gegenstandes an den zweiten Gegenstand gesteuert, sondern lediglich die Bewegung der in Eingriff stehenden Teile relativ zueinander, also zum Beispiel die Bewegung einer Schweißvorrichtung entlang einer Schweißbahn, wobei die Nahtstelle der miteinander zu verschweißenden Teile optisch erfaßt und kontinuierlich verfolgt wird. Während dieser Bewegungssteuerung findet jedoch keine Annäherung statt, vielmehr wird der Abstand mit Hilfe eines entsprechenden Regelsystems konstant gehalten.

Bei den Verfahren und Vorrichtungen, von welchen die vorliegende Erfindung ausgeht, ist zum Beispiel eine Zweistufenbewegung üblich, wobei zunächst entsprechend einem vorgegebenen Bewegungsprogramm eine erste Annäherungsbewegung erfolgt, die den ersten Gegenstand bzw. die miteinander in Eingriff zu bringenden Teile, in einen grob abgeschätzten näheren Abstandsbereich bringt, bei welchem jedoch aufgrund der Umstände und der vorgegebenen Randbedingungen, wie zum Beispiel der Bewegungbereiche der beiden Gegenstände, ein in Kontakttreten zunächst noch ausgeschlossen ist. Dann erfolgt eine optische Positionsvermessung der miteinander in Eingriff zu bringenden Teile und der Rest der Bewegung erfolgt unter Steuerung der Antriebseinrichtungen des ersten Gegenstandes entsprechend den in der vorherigen Position ermittelten Koordinaten. Während dieses letzten Abschnittes der Bewegung findet jedoch keinerlei Kontrolle und Korrektur der Bewegung mehr statt. Letzteres kann vor allem dann ein Problem sein, wenn unvermittelte weitere Bewegungen des zweiten Gegenstandes möglich sind oder wenn der zweite Gegenstand sich weiterbewegt, insbesondere wenn er sich mit nicht gleichförmiger Geschwindigkeit bewegt. Während gleichförmige Bewegungen des zweiten Gegenstandes möglicherweise noch mit dem herkömmlichen Verfahren und der entsprechenden Vorrichtung Berücksichtigung finden können, ist dies bei unvermittelten, nicht vorhersehbaren oder ungleichförmigen Bewegungen des zweiten Gegenstandes relativ zum ersten Gegenstand nicht mehr möglich. Auch das Einstellen der Vorposition, in welcher die beiden Gegenstände einander zunächst grob angenähert werden, ist nur dann sinnvoll und problemlos möglich, wenn der Bewegungsspielraum des zweiten Gegenstandes relativ zu dem ersten bei der Bewegungsannäherung eingeschränkt ist, d.h. wenn definitiv feststeht, daß sich der zweite Gegenstand bzw. derjenige Teil des zweiten Gegenstandes, der mit Teilen des ersten Gegenstandes in Eingriff gebracht werden soll, innerhalb eines relativ kleinen, vorgegebenen Raumbereiches befindet.

Diese Bedingungen sind jedoch in der Praxis nicht immer zu erfüllen. So besteht zum Beispiel im Zuge der fortschreitenden Automatisierung ein Bedarf an einem automatischen Tanksystem, bei welchem ein Kraftfahrer mit seinem Fahrzeug in den Bereich vor einer automatischen Tanksäule fährt und zum Beispiel von innen die Tankklappe öffnet, woraufhin ein Tankrüssel automatisch an den Tankstutzen des Fahrzeuges herangeführt und mit dem Tankstutzen gekoppelt wird, und dann das Betanken des Fahrzeuges automatisch erfolgen kann. Für den Kunden ist ein solches System sehr angenehm, da er weder auf Bedienungspersonal warten noch befürchten muß, seine Hände mit Kraftstoff oder Öl zu beschmutzen, wie dies bei der Berührung herkömmlicher Zapfpistolen an Tankstellen häufig der Fall ist. Eine entsprechende Tankstelle könnte mit einem solchen System Personal und damit auch Kosten einsparen. Ein Problem besteht dabei allerdings darin, daß der Kraftfahrer sein Fahrzeug nicht immer exakt an eine vorgegebene Position fahren kann, sondern daß ihm die Position, die er beim Betanken einzunehmen hat, nur sehr grob vorgegeben werden kann, da es den meisten Fahrern nicht möglich wäre, ihr Fahrzeug zentimetergenau zu positionieren. Außerdem sind die Tankstutzen an verschiedenen Fahrzeugen in unterschiedlicher Höhe und auch im unterschiedlichen Abstand von der Front- oder Heckpartie des Fahrzeuges angebracht, so daß auch eine entsprechende Steuer- und Positioniervorgabe für den Kraftfahrer, wie sie zum Beispiel aus Waschanlagen bekannt ist, nur eine sehr grobe Positionierung des Tankstutzens ermöglichen würde. Selbst bei spezieller Einstellung auf einen bestimmten Kraftfahrzeugtyp, können diese Positionen aufgrund unterschiedlicher Beladundszustände der Fahrzeuge variieren. Schließlich kann es auch geschehen, daß sich der Tankstutzen aufgrund von Wankbewegungen des Fahrzeugaufbaus in seiner Lage verändert, während der Annäherungsvorgang bereits begonnen hat.

Es versteht sich, daß die vorliegende Erfindung nicht primär auf automatische Betankungssysteme gerichtet ist, sondern daß dieses Beispiel hier lediglich zu dem Zweck vorgestellt wurde, die bei manchen Annäherungsvorgängen auftretenden Probleme anschaulich verständlich zu machen, wenn der zweite Gegenstand relativ zu dem ersten Gegenstand beweglich bleibt und/oder nicht sehr exakt positionierbar ist.

Gegenüber dem vorstehend geschilderten Stand der Technik liegt der vorliegenden Erfindung demnach die Aufgabe zugrunde, ein Verfahren und eine Vorrichtung mit den eingangs genannten Merkmalen zu schaffen, welche einen sicheren Eingriff der miteinander in Eingriff zu bringenden Teile des ersten und zweiten Gegenstandes auch dann ermöglichen, wenn der zweite Gegenstand während der Annäherungsbewegung gegenüber dem ersten Gegenstand mehr oder weniger unkontrollierbare Bewegungen vollführen kann und/oder wenn die Position, die der zweite Gegenstand einnehmen kann, nur sehr grob festgelegt werden kann. Es versteht sich, daß dabei die Teile des zweiten Gegenstandes, die mit den Teilen des ersten Gegenstandes in Eingriff zu bringen sind, dennoch immer im Bewegungsbereich bzw. innerhalb der Reichweite der letzteren liegen müssen.

Hinsichtlich des eingangs erwähnten Verfahrens wird die der Erfindung zugrunde liegende Aufgabe dadurch gelöst, daß die Annäherung des ersten an den zweiten Gegenstand unter kontinuierlicher Erfassung der Strukturen des zweiten Gegenstandes durch die Erfassungseinrichtung des ersten Gegenstandes erfolgt, wobei der Abstand zwischen den miteinander in Eingriff tretenden Teilen des ersten und zweiten Gegenstandes kontinuierlich, und zwar entweder direkt oder indirekt ermittelt wird und wobei die Bewegungssteuerung in Abhängigkeit von diesem jeweils ermittelten Abstand und in Abhängigkeit von der jeweiligen festgestellten Abweichung von der gewünschten Annäherungslinie gesteuert wird.

Der wesentliche Unterschied zu den bekannten Verfahren besteht also darin, daß die Bewegungssteuerung bis zum endgültigen Andocken des ersten an den zweiten Gegenstand kontinuierlich kontrolliert wird und jederzeit noch Korrekturen möglich sind, auch wenn der zweite Gegenstand sich möglicherweise gegenüber dem ersten Gegenstand noch etwas bewegt, während der erste Gegenstand den zweiten nahezu erreicht hat.

Die entsprechende Vorrichtung ist dadurch gekennzeichnet, daß sie Einrichtungen zur kontinuierlichen, direkten oder indirekten Erfassung des Abstandes zwischen den miteinander in Eingriff zu bringenden Teilen des ersten und zweiten Gegenstandes, sowie Einrichtungen zur Steuerung der Annäherungsbewegung in Abhängigkeit von diesem jeweils ermittelten Abstand und in Abhängigkeit von der jeweiligen festgestellten Abweichung von der gewünschten Annäherungslinie aufweist.

Die entsprechenden Steuereinrichtungen können zum Beispiel die Vorrichtung so steuern, daß die Annäherungsbewegung bei Verringerung des Abstandes verlangsamt wird, so daß ausreichend Zeit für Korrekturen quer zur Annäherungsbewegung bleibt und so daß der Eingriff zwischen den miteinander in Eingriff zu bringenden Teilen hinreichend sanft erfolgt, während in größeren Abständen die Relativbewegung sehr schnell und mit geringerer Genauigkeit erfolgen kann.

Der bewegliche erste Gegenstand, an welchem optische Erfassungseinrichtungen angebracht sind, nimmt über seine Optik die am zweiten Gegenstand angebrachten oder vorhandenen Strukturen auf. Vorzuziehen sind dabei im übrigen speziell für die Bewegungssteuerung des ersten Gegenstandes ausgewählte und an dem zweiten Gegenstand angebrachte Strukturen, deren konkrete Ausgestaltung und Form speziell für die Bedürfnisse der Bewegungsannäherung ausgelegt ist. Ein solches Muster oder eine entsprechende Struktur könnte zum Beispiel aus zwei rechtwinklig in Form eines L zueinander angeordneten Balken oder aus drei Punkten bestehen, welche die Eckpunkte eines Dreiecks, vorzugsweise eines nicht gleichschenkligen und rechtwinkligen Dreiecks, wiedergeben. Die spezielle Struktur, die für den jeweiligen Anwendungszweck optimiert ist, hängt jedoch auch davon ab, ob diese Annäherungsbewegung auch mit einer bestimmten Orientierung der beiden Gegenstände zueinander zu erfolgen hat oder ob es auf diese Orientierung nicht ankommt. Im letzteren Fall könnte eine Annäherungsstruktur zum Beispiel aus einem einfachen Ring oder aus mehreren konzentrischen Ringen bestehen. Falls die Annäherung in verschiedenen, fest definierten Drehpositionen erfolgen kann, könnten ein entsprechendes Polygon oder Punkte, welche die Ecken eines solchen Polygons definieren, als Strukturen am zweiten Gegenstand angebracht werden. Auch auf die optische Erfaßbarkeit der Strukturen sollte dabei geachtet werden, vorzugsweise könnten solche Strukturen zum Beispiel auf einer reflektierenden Folie angebracht sein, die an einer entsprechenden Stelle auf den zweiten Gegenstand aufgeklebt wird.

Die Vorrichtung weist außerdem Skalierungseinrichtungen zur Anpassung der Größe der erfaßten Muster bzw. Strukturen an die gespeicherten Strukturen, bzw. umgekehrt, auf. Das entsprechende Verfahren nimmt diese Größenanpassung der erfaßten Strukturen vor. Die am ersten Gegenstand angebrachte optische Erfassungseinrichtung nähert sich während der Annäherungsbewegung des ersten Gegenstandes an den zweiten Gegenstand gleichzeitig ebenfalls an den zweiten Gegenstand an, so daß sich auch der Bildausschnitt dieser optischen Erfassungseinrichtung ständig verändert und insbesondere die Größe und eventuell auch die Orientierung der an dem zweiten Gegenstand angebrachten Struktur bzw. des Musters. Da es für die Annäherungsbewegung wichtig ist, daß die Struktur, die als Orientierungshilfe für die Annäherung des ersten an den zweiten Gegenstand dienen soll, als solche erkannt wird und da dies über Vergleiche mit entsprechenden, gespeicherten Mustern erfolgt, ist aufgrund des sich ändernden Bildausschnittes und der sich dadurch ändernden Größe der Struktur auch eine Anpassung zwischen den gespeicherten und den erfaßten Strukturen zweckmäßig und sinnvoll. Unter einem gespeicherten "Muster" oder gespeicherten "Strukturen" werden im Rahmen der vorliegenden Anmeldung nicht nur Muster in Form graphischer Daten, sondern auch abstrakt durch numerische Daten definierte Muster bzw. Strukturen verstanden, wobei es lediglich eine Frage der Ausgestaltung entsprechender Programme, Vergleiche und Erkennungsabläufe ist, inwieweit unmittelbar graphische Daten miteinander zu vergleichen sind oder ob zunächst graphische Daten in abstraktere, numerische Daten umgewandelt werden oder umgekehrt, wobei auch verschiedene Bildverarbeitungstechniken, wie Kontrastverstärkung, Änderungen in der Grauwertabstufung etc. involviert sein können.

Praktisch kann dies zum Beispiel durch eine Zoom-Optik erfolgen, die den Bildausschnitt bzw. die Brennweite eines Objektivs der optischen Erfassungseinrichtung ständig so anpaßt, daß das Muster im wesentlichen immer denselben Bildausschnitt einnimmt, vorzuziehen ist jedoch eine rein rechnerische Anpassung der Größe der Strukturen bzw. Muster. Dabei können die Anpassungsparameter, d.h. also entweder die konkrete Stellung des Zoom-Objektivs oder aber die Skalierungsfaktoren zwischen optischen Strukturen und gespeicherten Strukturen als indirekte Maßstäbe für den erreichten Abstand der miteinander in Eingriff zu bringenden Teile des ersten und zweiten Gegenstandes verwendet werden. Es versteht sich, daß der in Form der Skalierungsfaktoren indirekt ermittelte Abstand zwischen den genannten Teilen jederzeit in ein direktes Abstandsmaß umgerechnet werden könnte, obwohl dies für die Steuerung der Vorrichtung letztlich nicht erforderlich ist, da auch die indirekten Größen, die den Abstand eindeutig festlegen, als Steuerungsparameter verwendbar sind.

Es versteht sich, daß es zu dem Skalierungsvorgang alternative Methoden gibt, wie zum Beispiel das Abspeichern von Mustern in unterschiedlichen Größen und das Anpassen des optisch erfaßten Musters an jeweils eines der gespeicherten Muster, wobei die Anpassung an das am besten passende Muster dann ebenfalls ein Maß für den erreichten Abstand liefert. Derartige Alternativen sind letztlich auch Skalierungen bzw. Größenanpassungen zwischen den optisch erfaßten und gespeicherten Mustern.

Besonders bevorzugt ist eine Ausführungsform der Erfindung, bei welcher die optische Erfassungseinrichtung den zweiten Gegenstand bzw. die daran vorhandenen Strukturen von einem mit dem zweiten Gegenstand in Eingriff tretenden Teil des ersten Gegenstandes aus erfaßt. Konkret sollte also eine entsprechende Kameraoptik in einen Teil des ersten Gegenstandes integriert sein, der mit dem zweiten Gegenstand in Eingriff tritt. Dabei kann die Kameraoptik bzw. ein Objektiv in einen Hohlraum des betreffenden Teiles des ersten Gegenstandes integriert sein. Auch die gesamte Kamera kann in einem Hohlraum in dem ersten Gegenstand aufgenommen sein, wobei allerdings eine Ausgestaltung der Erfindung bevorzugt ist, bei welcher das Objektiv mit seiner dem zweiten Gegenstand nächstliegenden Fläche einen relativ großen Abstand zu der eigentlichen Kamera der optischen Erfassungseinrichtung hat. Dieser Abstand kann zum Beispiel bei einer starren Optik in einem Bereich von 10 bis 50 cm oder auch noch darüber liegen. Denkbar wäre eventuell auch eine Optik, die über Spiegel oder über ein geordnetes Bündel aus Lichtleitfasern das von dem Objektiv erzeugte Bild an eine relativ weit entfernte Kamera weiterleitet. Zunächst hat man dadurch den Vorteil, daß die Bewegungssteuerung bzw. die Erfassung der für die Bewegungssteuerung wesentlichen Parameter exakt von demjenigen Teil aus erfolgt, welches auch tatsächlich die Annähetung an den zweiten Gegenstand ausführt und mit diesem in Eingriff tritt. Damit sind jegliche Abschattungseffekte, wie sie bei stationär oder auch beweglich außerhalb des ersten Gegenstandes angebrachten Kameras auftreten können, vermieden. Die Anordnung nur der Kameraoptik in dem vordersten Bereich des mit dem zweiten Gegenstand in Eingriff tretenden Teiles des ersten Gegenstandes beschränkt dabei die Anordnung von Teilen, die der sonstigen Funktion der miteinander in Eingriff tretenden Teile nicht dienen, auf das absolut erforderliche Minimum. Diese Teile können dann ihrerseits eine minimale Baugröße haben.

Ein weiterer Vorteil der von dem Objektiv mehr oder weniger entfernt angeordneten Kamera liegt darin, daß eine solche Kamera im allgemeinen eine elektrische Stromversorgung enthält und daß es für manche Anwendungsfälle zweckmäßig ist, jegliche elektrische Stromversorgung von dem Eingriffsbereich der Teile des ersten und zweiten Gegenstandes fernzuhalten. Die Kameraoptik als rein passives, optisches Bauelement ist dabei unkritisch.

Entsprechendes gilt in der bevorzugten Ausführungsform auch für die Beleuchtung, die nach Möglichkeit ebenfalls in denjenigen Teil des ersten Gegenstandes integriert sein sollt, der mit dem zweiten Gegenstand in Eingriff tritt. Die so integrierte Beleuchtung stellt die optimale Ausleuchtung der von der optischen Erfassungseinrichtung zu erfassenden Strukturen sicher. Auch die Beleuchtungseinrichtung ist in der bevorzugten Ausführungsform der Erfindung so ausgestaltet, daß keinerlei elektrische Ladungen, Funken oder sonstige Gefahrenquellen im Eingriffsbereich des ersten mit dem zweiten Gegenstandes entstehen können, indem eine aus Lichtleitfasern bestehende Beleuchtungseinrichtung verwendet wird, wobei die Lichtleitfasern an ihrem einen, von dem Eingriffsbereich entfernt liegenden Ende mit einer Lichtquelle verbunden sind. Zweckmäßigerweise werden jeweils die Lichtleitfasern individuell mit einer entsprechenden Lichtquelle verbunden, so daß es auch zwischen den Lichtleitfasern nicht zu lokalen Licht- und damit Energiekonzentrationen kommen kann und so daß am vorderen Ende der Lichtleitfasern das Licht mit einer gleichmäßig verteilten Leuchtdichte austritt.

Es versteht sich, daß je nach Ausgestaltung der miteinander in Eingriff tretenden Teile die optische Erfassungseinrichtung bzw. die Kameraoptik und die Beleuchtungseinrichtungen mehr oder weniger zentral oder auch exzentrisch in dem Teil des ersten Gegenstandes angeordnet sein können, welches mit dem zweiten Gegenstand in Eingriff tritt.

Zweckmäßigerweise ist insbesondere für den Nahbereich der Annäherung ein Weitwinkelobjektiv der optischen Erfassungseinrichtung vorgesehen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine erste Variante der erfindungsgemäßen Vorrichtung mit einer zentralen Anordnung der optischen Erfassungseinrichtung und
- Figur 2: eine Ausführungsform mit einer exzentrischen Anordnung der optischen Erfassungseinrichtung.

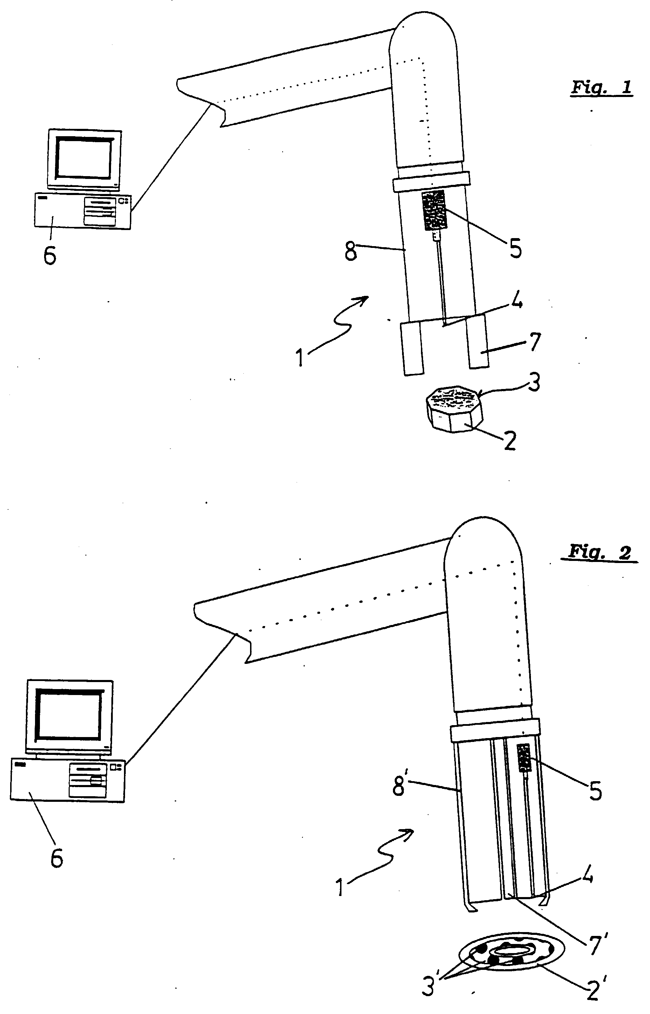

Man erkennt in Figur 1 einen bewegbaren Roboterarm 1, an dessen vorderen Ende eine Hülse 8 angebracht ist, die wiederum ein Werkzeug 7 trägt, das für den Eingriff mit einem zweiten Gegenstand 2 ausgestaltet ist. Bei dem Gegenstand 2, der hier lediglich schematisch wiedergegeben ist und stellvertretend für einen beliebigen, insbesondere beliebig großen und beliebig komplizierten Gegenstand steht, handelt es sich im vorliegenden Fall um ein regelmäßig achteckiges Prisma, dessen einen achteckigen Polygonzug bildende Kanten eine Struktur 3 darstellen, die optisch gut erfaßbar ist. Bei dem Werkzeug 7 kann es sich um gegenüberliegende Greifklauen handeln, das Werkzeug 7 kann aber auch ein Hohlteil sein, welches passend zu dem Gegenstand 2 in einem achteckigen Polygonzug angeordnete Innenflächen aufweist. In der Hülse 8 ist eine Kamera 5 mit einer Kameraoptik 4 aufgenommen, wobei die Kameraoptik 4 die achteckige Struktur 3 abbildet und auf entsprechende lichtempfindliche Flächen der Kamera 5 projiziert. Die lichtempfindliche Fläche der Kamera 5 ist im allgemeinen eine Matrix aus lichtempfindlichen Teilflächen bzw. Pixeln, wie sie beispielsweise auch in Videokameras Verwendung finden, wobei allerdings auch andere lichtempfindliche Flächen und Aufzeichnungsmedien verwendet werden könnten.

Das von der Kamera empfangene Bildsignal wird elektronisch umgewandelt und an eine Steuereinheit 6 übermittelt, die im allgemeinen einen Mikroprozessor und Speichereinrichtungen enthält. Die von der Kamera 5 empfangenen Bilder werden in der Steuereinheit 6 ausgewertet und zwischengespeichert. Zu der Auswertung gehört insbesondere eine Muster- bzw. Strukturerkennung, im allgemeinen durch Vergleich mit einem in der Speichereinrichtung gespeicherten Muster bzw. einer gespeicherten Struktur. Die Auswerteeinheit enthält darüberhinaus auch eine Skalierungseinrichtung, welche es ermöglicht, vor dem Vergleich die Größe der erfaßten Struktur 3, 3', zum Beispiel den wechselseitigen Abstand zweier oder dreier bestimmter Punkte der Struktur 3', an die Größe der gespeicherten Struktur anzupassen, um so zu einer positiven Mustererkennung zu kommen.

Die Kameraoptik 4 ist zentral in der Hülse und dem Werkzeug 7 angeordnet, so daß die gesteuerte Bewegung des Roboterarmes 1 derart erfolgen kann, daß die Kameraoptik 4 sich auf das Zentrum des von ihr erfaßten Polygonzuges 3 ausrichtet und die Bewegung derart erfolgt, daß der Polygonzug konzentrisch zu einem Zielpunkt der Bewegung angeordnet bleibt. Dabei wird das von der Optik 4 und der Kamera 5 erfaßte Bild kontinuierlich neu ausgewertet, bis der gesamte Annäherungsvorgang abgeschlossen ist und der Eingriff zwischen dem Werkzeug 7 und dem Gegenstand 2 stattgefunden hat bzw. bis die vorgesehene Endposition erreicht ist und das Werkzeug 7 zum Ergreifen des Gegenstandes 2 betätigt werden kann.

In Figur 2 ist eine sehr ähnliche Anordnung dargestellt, in welcher der Roboterarm 1 anstelle eines Werkzeuges 7 mit einem Einfüllstutzen 7' einer automatischen Betankungsvorrichtung ausgerüstet ist. Dementsprechend ist der Gegenstand 2' ein Tankstutzen, zum Beispiel der Tankstutzen eines Fahrzeuges. Konzentrisch um eine zentrale Öffnung des Tankstutzens 2' herum sind Strukturelemente 3' vorgesehen, die von der Kameraoptik 4 erfaßt werden. Im konkreten Fall ist in der Hülse 8' der Einfüllstutzen 7' zentral angeordnet und die Kamera 5 und die Kameraoptik 4 sind exzentrisch hierzu angeordnet. Das Vorderende der Hülse 8' kann aus einzelnen Fingern oder Kupplungselementen bestehen, die mit entsprechenden Aussparungen oder Kupplungsgegenstücken am Tankstutzen 2' in Eingriff treten. Auch in diesem Fall hat die Kameraoptik 4 während des gesamten Annäherungsvorganges des Roboterarmes 1 an den Tankstutzen 2' immer eine freie Sicht auf den Tankstutzen 2' bzw. die daran angeordneten Strukturelemente 3'. Die Mustererkennung der Strukturelemente 3' erfolgt in völlig analoger Weise wie die Mustererkennung im Falle des Polygonzuges 3 in der Ausführungsform gemäß Figur 1. Die Steuerung des Roboterarmes 1 erfolgt in diesem Fall allerdings nicht so, daß das Vorderende der Kamera in das Zentrum des Musters 3' geführt wird, sondern zum Beispiel so, daß die Kameraoptik 4 sich den Musterpunkten 3' annähert, aus deren Lage der Schluß auf die Lage der gesamten Strukturebene der Musterpunkte 3' möglich ist, die zum Beispiel ein gleichseitiges Dreieck aufspannen. Auch hier erfolgt während des Annäherungsvorganges eine fortgesetzte Skalierung und der erforderliche Skalierungsfaktor stellt bei bekannten Abständen der Musterpunkte 3' bzw. allgemein bei bekannten Abmessungen der Strukturelemente 3 bzw. 3' gleichzeitig ein Maß für den aktuell erreichten Abstand zwischen dem Werkzeug 7 und dem Gegenstand 2 bzw. zwischen dem Einfüllstutzen 7' und dem Tankstutzen 2' dar. Es versteht sich, daß der Tankstutzen 7' das vordere Ende der Kameraoptik 4 und auch der Hülse 8' um einen mehr oder weniger großen Betrag überragen könnte und daß im übrigen die vorderen Kupplungselemente oder Finger der Hülse 8' ebenso wie auch die Kameraoptik in entsprechend am Tankstutzen 2' vorgesehene Hohlräume eintauchen könnten, während der Einfüllstutzen 7' in die zentrale Öffnung bzw. ein zentrales Rohr des Tankstutzens 2' eingeführt wird.

Der in den Zeichnungen bewußt angedeutete, relativ große Abstand zwischen dem Objektiv 4 der Kameraoptik und dem elektrischen bzw. elektronischen Aufzeichnungsbereich in der eigentlichen Kamera 5 dient bei den vorliegend dargestellten Ausführungsformen dem Zweck, alle strom- bzw. spannungführenden Teile in einem möglichst großen Abstand von dem Arbeitsbereich der Werkzeuge 7 bzw. 7' und dem zweiten Gegenstand 2 bzw. 2' entfernt zu halten. Im Falle des Tankstutzens 7' dient diese vor allem dem Zweck, die einschlägigen Explosionsschutzbestimmungen zu erfüllen. Es versteht sich, daß darüberhinaus die Kamera 5 noch durch zusätzliche Mittel gegenüber dem Arbeitsbereich abgegrenzt werden kann, zum Beispiel durch eingesetzte Dichtungs- oder Abschirmscheiben, die sich über den Innenquerschnitt der Hülsen 8 bzw. 8' erstrecken und lediglich für die hindurchzuführende Kameraoptik und gegebenenfalls für Werkzeuge wie den Tankstutzen 7' oder andere Steuerungs- und Betätigungseinrichtungen entsprechende Durchführungen aufweisen.

## Patentansprüche

1. Verfahren zum Steuern der Bewegung eines beweglichen ersten Gegenstandes (1) relativ zu einem zweiten Gegenstand (2, 2'), mit Hilfe einer optischen Erfassung des zweiten Gegenstandes (2, 2') oder eines Teiles desselben durch ein optisches Erfassungssystem (4, 5), und zwar unter Erkennung eines am zweiten Gegenstand (2, 2') vorgegebenen Musters (3, 3') bzw. einer daran vorhandenen Struktur, wobei Vergleichsstrukturen bzw. -muster in einer Speichereinrichtung gespeichert sind, wobei der erste (1) und der zweite Gegenstand (2, 2') aus einer voneinander entfernten Position einander angenähert und miteinander in Eingriff gebracht werden, **dadurch gekennzeichnet, daß** die Annäherung des ersten an den zweiten Gegenstand unter kontinuierlicher Erfassung der Strukturen (3, 3') des zweiten Gegenstandes (2, 2') durch die Erfassungseinrichtung (4, 5) des ersten Gegenstandes (1) erfolgt, wobei der Abstand zwischen den miteinander in Eingriff tretenden Teilen des ersten und zweiten Gegenstandes (1, 2, 2') kontinuierlich direkt oder indirekt ermittelt wird, wobei die Bewegungssteuerung in Abhängigkeit von dem jeweils erreichten Abstand und in Abhängigkeit von der jeweiligen festgestellten Abweichung von der gewünschten Annäherungsbahn erfolgt.

2. Verfahren nach Anspruch 1, dadurch gekennzeichnet, daß während der Annäherung des ersten an den zweiten Gegenstand eine Größenanpassung zwischen der von der optischen Erfassungseinrichtung (3, 4) erfaßten und der in der Speichereinrichtung gespeicherten Struktur vorgenommen wird.

3. Verfahren nach Anspruch 2, dadurch gekennzeichnet, daß die Anpassung optisch durch eine Zoom-Optik erfolgt.

4. Verfahren nach Anspruch 2, dadurch gekennzeichnet, daß die Größenanpassung rechnerisch erfolgt.

5. Verfahren nach einem der Ansprüche 1 bis 4, dadurch gekennzeichnet, daß die optische Erfassungseinrichtung (3, 4) den zweiten Gegenstand (2, 2') bzw. die daran vorhandene Struktur (3, 3') von einem mit dem zweiten Gegenstand (2, 2') in Eingriff tretenden Teil des ersten Gegenstandes (1) aus erfaßt.

6. Vorrichtung zum Steuern der Bewegung eines beweglichen ersten Gegenstandes (1) relativ zu einem zweiten Gegenstand (2, 2'), mit Antriebs- und Steuereinrichtungen für mindestens einen der Gegenstände (1, 2, 2'), einer Musterspeicher- und einer Mustererkennungseinrichtung sowie einer optischen Erfassungseinrichtung (4, 5) für am zweiten Gegenstand (2, 2') vorgegebene oder angebrachte Strukturen (3, 3'), **dadurch gekennzeichnet, daß** die Vorrichtung Einrichtungen zur kontinuierlichen, direkten oder indirekten Erfassung des Abstandes zwischen den miteinander in Eingriff zu bringenden Teilen des ersten und zweiten Gegenstandes (1, 2, 2'), sowie Einrichtungen zur Steuerung der Annäherungsbewegung in Abhängigkeit von dem jeweils ermittelten Abstand und in Abhängigkeit von der jeweiligen festgestellten Abweichung von der gewünschten Annäherungsbahn aufweist.

7. Vorrichtung nach Anspruch 6, dadurch gekennzeichnet, daß sie Skalierungseinrichtung zur Anpassung der Größe der erfaßten Musterstrukturen an die gespeicherten Strukturen aufweist.

8. Vorrichtung nach Anspruch 7, dadurch gekennzeichnet, daß die Skalierungseinrichtungen eine Zoom-Optik aufweisen.

9. Vorrichtung nach Anspruch 7, dadurch gekennzeichnet, daß die Skalierungseinrichtungen Teil der Mustererkennungseinrichtung sind.

10. Vorrichtung nach einem der Ansprüche 6 bis 9, dadurch gekennzeichnet, daß die Kameraoptik (4) in den ersten Gegenstand (1) integriert ist.

11. Vorrichtung nach Anspruch 10, dadurch gekennzeichnet, daß die Kameraoptik (4) in einem Hohlraum (6) des mit dem zweiten Gegenstand (2, 2') in Eingriff tretenden Teiles des ersten Gegenstandes (1) aufgenommen ist.

12. Vorrichtung nach Anspruch 10 oder 11, dadurch gekennzeichnet, daß eine Kamera (5) in einem Hohlraum (6) des mit dem zweiten Gegenstand (2, 2') in Eingriff tretenden Teiles des ersten Gegenstandes (1) aufgenommen ist.

13. Vorrichtung nach einem der Ansprüche 6 bis 12, dadurch gekennzeichnet, daß eine Beleuchtungseinrichtung in einem Hohlraum (6) des mit dem zweiten Gegenstand (2, 2') in Eingriff tretenden Teiles des ersten Gegenstandes (1) aufgenommen ist.

14. Vorrichtung nach Anspruch 13, dadurch gekennzeichnet, daß die Beleuchtungseinrichtung aus Lichtleitfasern besteht, deren eines Ende mit einer Lichtquelle verbunden ist, welche von den miteinander in Eingriff zu bringenden Teilen der ersten und zweiten Gegenstände (1, 2, 2') entfernt liegt.

15. Vorrichtung nach einem der Ansprüche 6 bis 14, dadurch gekennzeichnet, daß ein Objektiv einer Kameraoptik (4) einen Abstand von mindestens 10 und vorzugsweise mindestens 20 cm zu einer Kamera (5) hat.

16. Vorrichtung nach einem der Ansprüche 6 bis 15, dadurch gekennzeichnet, daß die optische Erfassungseinrichtung ein Weitwinkelobjektiv aufweist.

17. Vorrichtung nach einem der Ansprüche 6 bis 16, dadurch gekennzeichnet, daß der zweite Gegenstand mit speziell für die Annäherungsbewegung des ersten Gegenstandes angebrachten, optisch erfaßbaren Strukturen versehen ist.
